# EUROPÄISCHE PATENTANMELDUNG

(11) **EP 3 217 518 A1**
(43) Veröffentlichungstag der Anmeldung: **13.09.2017**
(21) Anmeldenummer: 16159143.3
(22) Anmeldetag: 08.03.2016
(51) Int. Cl.: H02K 11/25, G01J 5/00

(54) **ELEKTRISCHE ROTIERENDE MASCHINE MIT ASYNCHRONEM ANLAUF**

(71) Anmelder: Siemens Aktiengesellschaft, 80333 München (DE)
(72) Erfinder: Jungiewicz, Artur, 13086 Berlin (DE); Greinacher, Moritz, 14197 Berlin (DE); Hauptmann, Roland, 13599 Berlin (DE); Hübner, Lutz, 14165 Berlin (DE); Schünemann, Andreas, 14089 Berlin (DE)

(57) **Zusammenfassung**

Die Erfindung betrifft eine elektrische rotierende Maschine (1) mit einem um eine Rotationsachse (4) rotierbaren Rotor (3), einem Stator (2) und eine Vorrichtung (10) zur berührungslosen Temperaturerfassung, welche dafür vorgesehen ist, eine Temperatur auf einer Oberfläche (14) des Rotors (3) zu erfassen. Um, im Vergleich zum Stand der Technik, eine hohe Zuverlässigkeit und eine hohe Verfügbarkeit zu erzielen, wird vorgeschlagen, dass die Vorrichtung (10) einen ersten Temperatursensor (8) und einen ersten Sensorkopf (7) aufweist, wobei sich zumindest der erste Sensorkopf (7) in einem durch den Stator (2) verlaufenden und zum Rotor (3) hin offenen ersten Kanal (12) befindet.

## Beschreibung

Die Erfindung betrifft eine elektrische rotierende Maschine mit einem um eine Rotationsachse rotierbaren Rotor, einem Stator und eine Vorrichtung zur berührungslosen Temperaturerfassung, welche dafür vorgesehen ist, eine Temperatur auf einer Oberfläche des Rotors zu erfassen.

Die Erfindung betrifft weiterhin ein Verfahren zur Bestimmung der Oberflächentemperatur des Rotors einer elektrischen rotierenden Maschine mit einer Vorrichtung zur berührungslosen Temperaturerfassung.

Eine derartige Vorrichtung zur berührungslosen Temperaturerfassung kommt insbesondere in elektrischen Maschinen, beispielsweise Motoren oder Generatoren, vor, welche mit einem asynchronen Anlauf gestartet werden. Beim asynchronen Anlauf einer elektrischen rotierenden Maschine, welcher auch DOL-Anlauf genannt wird, wobei DOL für "direct on line" steht, wird durch die beim asynchronen Anlauf auftretenden Wirbelströme eine bestimmte Wärmemenge in den Rotor der elektrischen rotierenden Maschine eingeprägt. Insbesondere bei Synchronmaschinen mit massiven Schenkelpolen und einer Leistung von mindestens einem Megawatt führen die auftretenden Wirbelströme zu einer Erwärmung der Polschuhe.

Trotz des Nachteils der hohen Wärmeentwicklung im Rotor wird der asynchrone Anlauf bevorzugt bei elektrischen rotierenden Maschinen, welche mit einer festen Drehzahl betrieben werden, verwendet, da dieser, beispielsweise durch den Wegfall eines ausschließlich für den Anlauf erforderlichen Anlaufumrichters, kostengünstig und einfach in der Durchführung ist.

Die beim asynchronen Anlauf entstehenden Wirbelstromverluste dringen schlupfabhängig unterschiedlich tief in den Polschuh ein. Die daraus resultierende Polschuherwärmung wird bisher mit analytischen Verfahren berechnet, wobei die gemittelte Polschuhtemperatur abhängig von der Eindringtiefe zu verschiedenen Anlaufzeitpunkten ermittelt wird. Die Einstellwerte der zulässigen Anlaufhäufigkeiten, welche Wärmekonto genannt werden, und die Pausenzeiten zum thermischen Schutz des Läufers, welche Wiedereinschaltsperre genannt werden, sind ausschließlich berechnete Werte. Das Läufertemperaturverhalten wird anhand eines thermischen Abbildes in der Schutz- und Erregerschranksteuerung nachgebildet.

Bei Mehrfach- und/oder abgebrochenen Anläufen kann die maximal zulässige Temperatur der Polschuhe überschritten werden, insbesondere wenn die analytische Rechnung und das im Schutz- und Erregerschrank abgelegte thermische Abbild nicht mit der Realität übereinstimmen. Durch fehlerhafte oder unwirksame Schutzeinstellungen im Schutz- und Erregerschrank kann der Rotor irreversibel geschädigt werden.

Aus dem europäischen Patent EP 2 467 686 B1 sind ein Verfahren und eine Anordnung mit einer elektrischen Maschine, die einen Stator und einen Rotor umfasst, sowie mit einem Infrarot-Temperatursensor, wobei das Detektionsfeld des Infrarot-Temperatursensors auf eine Mantelfläche des Rotors ausgerichtet ist, bekannt. Dabei ist der Infrarot-Temperatursensor eine Thermosäule zur berührungslosen, radiometrischen Erfassung einer Temperatur des Rotors, die in einer Nut des Stators angeordnet ist und mit Nutverschlusskeil-Standard-Bauteilen der elektrischen Maschine montagekompatibel ausgestaltet ist, und somit eine Betriebsüberwachung des thermischen Zustandes einer elektrischen Maschine in neuartiger Weise zulässt, derart, dass angepasste Leistungszustände realisierbar werden.

Der Erfindung liegt die Aufgabe zugrunde, eine elektrische rotierende Maschine mit asynchronem Anlauf anzugeben, welche, im Vergleich zum Stand der Technik, eine hohe Zuverlässigkeit und eine hohe Verfügbarkeit aufweist.

Diese Aufgabe wird durch eine elektrische rotierende Maschine mit einem um eine Rotationsachse rotierbaren Rotor, einem Stator und eine Vorrichtung zur berührungslosen Temperaturerfassung, welche dafür vorgesehen ist, eine Temperatur auf einer Oberfläche des Rotors zu erfassen, gelöst, wobei die Vorrichtung einen ersten Temperatursensor und einen ersten Sensorkopf aufweist, wobei sich zumindest der erste Sensorkopf in einem durch den Stator verlaufenden und zum Rotor hin offenen ersten Kanal befindet.

Durch die bevorzugt kontinuierliche Erfassung der tatsächlichen Temperatur auf der Rotoroberfläche, beispielsweise während eines Anlaufs und bei einem Abbruch, werden die Werte für das Wärmekonto und die Wiedereinschaltsperre optimiert. Dies erhöht die Zuverlässigkeit und die Verfügbarkeit der elektrischen rotierenden Maschine. Da sich der erste Sensorkopf in einem durch den Stator verlaufenden und zum Rotor hin offenen ersten Kanal befindet, besteht die Möglichkeit die empfindliche Auswerteelektronik des Temperatursensors außerhalb des Stators zu betreiben. Dies ist vorteilhaft, da durch die niedrigere Temperatur außerhalb des Stators für die Elektronik Standardkomponenten verwendet werden können, was Kosten einspart und den Service erleichtert. Weiterhin müssen durch den Einbau der Vorrichtung zur berührungslosen Temperaturerfassung in einem derartigen Kanal keine Komponenten der elektrischen rotierenden Maschine angepasst oder speziell für den Betrieb der Vorrichtung gefertigt werden. Weiterhin ist die Vorrichtung zur berührungslosen Temperaturerfassung dadurch nachrüstbar.

Weiterhin wird die Aufgabe durch ein Verfahren zur Bestimmung der Oberflächentemperatur des Rotors einer elektrischen rotierenden Maschine mit einer Vorrichtung zur berührungslosen Temperaturerfassung gelöst, welche einen ersten Temperatursensor und einen ersten Sensorkopf aufweist, wobei ein Messfeld der Vorrichtung auf eine Oberfläche des Rotors ausgerichtet wird, wobei daraufhin die von der Oberfläche ausgehende Wärmestrahlung vom ersten Sensorkopf empfangen wird, wobei der erste Temperatursensor darauffolgend die Wärmestrahlung erfasst und ein von der Leistung der Wärmestrahlung abhängiges Digitalsignal erzeugt, welches über eine Datenschnittstelle an eine Auswerteeinheit übertragen wird.

Da der erste Sensorkopf die Oberflächentemperatur des Rotors berührungslos erfasst, wird der eigentliche Betrieb des Motors durch die Messungen nicht beeinflusst. Durch die räumliche Aufteilung der Vorrichtung zur berührungslosen Temperaturerfassung in einen Sensorkopf und einen Temperatursensor besteht die Möglichkeit, die empfindliche Auswerteelektronik des Temperatursensors außerhalb der in der elektrischen rotierenden Maschine herrschenden Umgebungsbedingungen zu platzieren. Dies ist vorteilhaft, da so für die Elektronik Standardkomponenten verwendet werden können, was Kosten einspart und den Service erleichtert.

Bevorzugt ist der erste Kanal als Kühlluftkanal ausgeführt. Dies ist kostengünstig, da keine Modifikation an der elektrischen rotierenden Maschine vorgenommen werden muss. Weiterhin ist die Vorrichtung zur berührungslosen Temperaturerfassung dadurch nachrüstbar. Überdies sorgen die niedrigeren Temperaturen in einem Kühlluftkanal dafür, dass die Komponenten für einen niedrigeren Temperaturbereich spezifiziert werden können.

In einer bevorzugten Ausgestaltung ist der erste Temperatursensor als Pyrometer ausgeführt, welches eine minimale Erfassungszeit von weniger als 40 µs aufweist und dafür geeignet ist mindestens 25.000 Temperaturmessungen in der Sekunde durchzuführen. Bevorzugt wird ein High-Speed-Teilstrahlungspyrometer mit einer minimalen Erfassungszeit von weniger als 20 µs verwendet, welches dafür geeignet ist 50.000 Temperaturmessungen in der Sekunde durchzuführen. Als Teilstrahlungspyrometer werden die Pyrometer bezeichnet, bei denen eine Temperatur in einem begrenzten Spektralbereich ermittelt wird. Beispielsweise ergeben sich daraus bei einer Polpaarzahl von 2 und einer Frequenz von 50 Hz 2000 Messungen pro Rotorumdrehung und damit eine Winkelauflösung von 0,18° in Umfangsrichtung. Dies ist besonders vorteilhaft, da mit einem einzigen derartigen Pyrometer pro Umdrehung genügend Messungen auf der Rotoroberfläche durchführbar sind, um beispielsweise mit hinreichender Genauigkeit die Maximaltemperatur der Rotoroberfläche ermitteln zu können.

In einer weiteren vorteilhaften Ausführungsform ist der erste Sensorkopf über einen ersten Lichtleiter mit dem ersten Temperatursensor verbunden. Beispielsweise weisen sowohl der Sensorkopf als auch der Lichtleiter keine aktiven elektrischen Komponenten, deren Funktionalität häufig stark von der Umgebungstemperatur abhängt, auf. Insbesondere der Temperatursensor kann außerhalb der in der elektrischen rotierenden Maschine herrschenden Umgebungsbedingungen, insbesondere der hohen Umgebungstemperatur aber auch, beispielsweise bei Ex-Motoren, außerhalb explosionsfähiger Gase oder Flüssigkeiten, betrieben werden. Dies ist vorteilhaft, da für die Elektronik Standardkomponenten verwendet werden können und keine zusätzlichen Maßnahmen getroffen werden müssen, um die Elektronik zu schützen, was Kosten und Aufwand, insbesondere bei der Fertigung und Wartung, einspart.

Vorteilhaft weist die elektrische rotierende Maschine einen Drehzahlsensor auf, welcher dafür vorgesehen ist, den ersten Temperatursensor mit der Drehzahl des Rotors zu synchronisieren. Dies ist vorteilhaft, da durch eine präzise Synchronisation mit der Drehzahl der elektrischen rotierenden Maschine die Oberflächentemperatur auf dem Rotor, auch wenn sie bevorzugt mit hoher Frequenz durchgeführt werden, annähernd an derselben Stelle in Umfangsrichtung ermittelt werden kann. Dies ist vorteilhaft, da sich so eine höhere Genauigkeit und Zuverlässigkeit der Messungen, insbesondere über einen zeitabhängigen Verlauf, ergibt.

In einer bevorzugten Ausgestaltung weist die Vorrichtung zur berührungslosen Temperaturerfassung mindestens einen zweiten Sensorkopf auf, welcher sich in einem durch den Stator verlaufenden und zum Rotor hin offenen zweiten Kanal befindet. Insbesondere bei Synchronmaschinen mit massiven Schenkelpolen weist die Rotoroberfläche Lücken in Umfangsrichtung auf. Mit mindestens einem weiteren Sensorkopf ist sichergestellt, dass auch bei einem Stillstand des Rotors zuverlässig an mindestens einer Stelle auf der Rotoroberfläche Temperaturmessungen durchgeführt werden.

Bevorzugt weist die Vorrichtung zur berührungslosen Temperaturerfassung mindestens einen zweiten Temperatursensor auf, wobei der zweite Sensorkopf mit dem zweiten Temperatursensor verbunden ist. So ist sichergestellt, dass auch bei einem Stillstand des Rotors genügend Temperaturmessungen an zumindest einer Stelle auf der Rotoroberfläche durchgeführt werden.

In einer weiteren vorteilhaften Ausführungsform weist der zweite Kanal zum ersten Kanal in Umfangsrichtung einen Winkelversatz auf, welcher näherungsweise einem halben Öffnungswinkel benachbarter Pole des Rotors entspricht. Der Öffnungswinkel ist hierbei der Winkel, den insbesondere zwei benachbarte Schenkelpole in Umfangsrichtung einschließen, wobei sich zwischen den benachbarten Polen beispielsweise eine Lücke auf der Rotoroberfläche befindet. Beispielsweise beträgt der Öffnungswinkel bei einem Schenkelpolläufer mit zwei Polpaaren 90°, wobei der erste Kanal und der zweite Kanal einen Winkelversatz von 45° aufweisen. So ist sichergestellt, dass auch bei einem Stillstand des Rotors zuverlässig an mindestens einer Stelle auf der Rotoroberfläche Temperaturmessungen durchgeführt werden.

In einer bevorzugten Ausgestaltung führt ab einem asynchronen Anlauf der elektrischen rotierenden Maschine der erste Temperatursensor, welcher als Pyrometer ausgeführt ist und welcher durch einen Drehzahlsensor mit der Drehzahl des Rotors synchronisiert wird, mindestens 25.000 Temperaturmessungen in der Sekunde in Umfangsrichtung durch, wobei aus der Vielzahl an Temperaturmessungen pro Rotorumdrehung eine Maximaltemperatur der Oberfläche des Rotors und/oder eine winkelabhängige Temperaturverteilung ermittelt werden. Dies ist vorteilhaft, da so die elektrische rotierende Maschine zuverlässig und effizient eingesetzt werden kann.

Vorteilhaft wird aus einer Vielzahl an Maximaltemperaturen ein zeitabhängiger Verlauf der Maximaltemperatur ermittelt. Durch Messungen des zeitlichen Temperaturverhaltens des Rotors kann die elektrische rotierende Maschine zuverlässig und effizient eingesetzt werden.

Im Folgenden wird die Erfindung anhand der in den Figuren dargestellten Ausführungsbeispiele näher beschrieben und erläutert.

Es zeigen:
- FIG 1: einen Querschnitt einer elektrischen rotierenden Maschine mit einer ersten Ausführungsform einer Vorrichtung zur berührungslosen Temperaturerfassung,
- FIG 2: einen Querschnitt einer elektrischen rotierenden Maschine mit einer zweiten Ausführungsform einer Vorrichtung zur berührungslosen Temperaturerfassung,
- FIG 3: einen Längsschnitt einer Vorrichtung zur berührungslosen Temperaturerfassung und
- FIG 4: eine schematische Darstellung eines typischen Temperaturverlaufs bei einem asynchronen Anlauf.

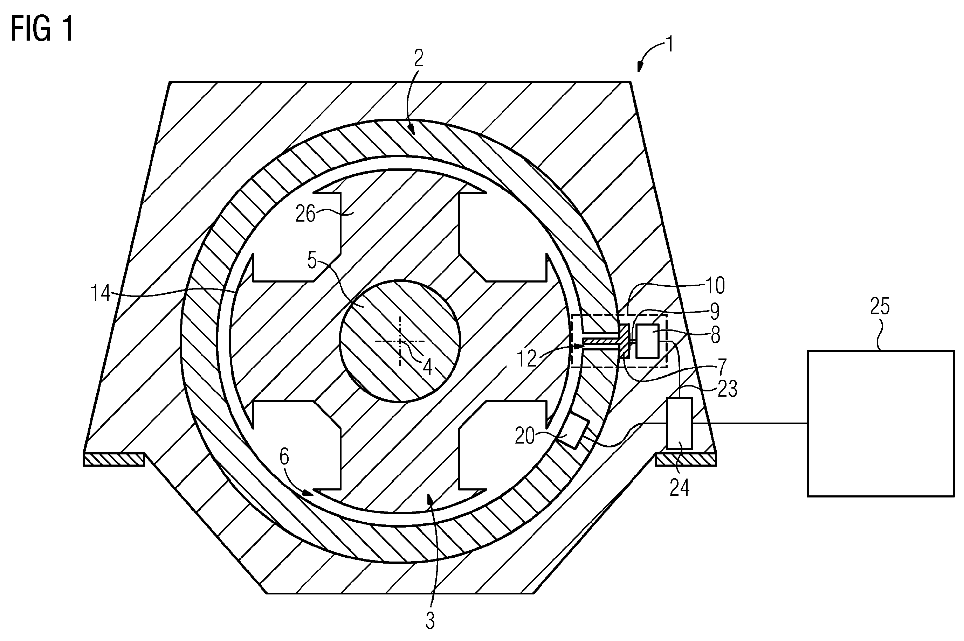

FIG 1 zeigt einen Querschnitt einer elektrischen rotierenden Maschine 1 mit einer ersten Ausführungsform einer Vorrichtung 10 zur berührungslosen Temperaturerfassung. Die elektrische rotierende Maschine 1 ist exemplarisch als Synchronmaschine ausgeführt und weist einen um eine Rotationsachse 4 rotierbaren Rotor 3, welcher als massiver Schenkelpolläufer ausgeführt ist, sowie einen Stator 2 auf. Zwischen dem Stator 2 und dem Rotor 3 befindet sich ein Luftspalt 6. Der Rotor 3 weist vier Pole 26 und eine Welle 5 auf. Die Spulen im Rotor 3 und im Stator 2 sind aus Gründen der Übersichtlichkeit nicht dargestellt. Der Gegenstand der Erfindung ist auch auf Asynchronmaschinen übertragbar.

Die elektrische rotierende Maschine 1 weist weiterhin eine Vorrichtung 10 zur berührungslosen Temperaturerfassung auf der Oberfläche 14 des Rotors 3 auf, welche einen ersten Sensorkopf 7 und einen ersten Temperatursensor 8 aufweist, wobei der erste Sensorkopf 7 über einen ersten Lichtleiter 9 mit dem ersten Temperatursensor 8 verbunden ist.

Der Sensorkopf 7 befindet sich in einem durch den Stator 2 verlaufenden und zum Rotor 3 hin offenen ersten Kanal 12, welcher als Kühlluftkanal ausgeführt ist. Durch den Kühlluftkanal wird in dieser Ausführungsform das Kühlmedium, welches durch den Luftspalt 6 zwischen Stator 2 und Rotor 3 verläuft, in radialer Richtung nach außen hin abgeführt.

Der Temperatursensor 8 ist als High-Speed-Teilstrahlungspyrometer ausgeführt, welches eine minimale Erfassungszeit von weniger als 20 µs aufweist und dafür geeignet ist mindestens 50.000 Temperaturmessungen in der Sekunde durchzuführen. Da der Rotor 3 eine exemplarische Polpaarzahl von 2 aufweist, werden bei einer Speisung der elektrischen rotierenden Maschine 1 mit einer Netzfrequenz von 50 Hz 2000 Messungen pro Rotorumdrehung durchgeführt, was einer Winkelauflösung von 0,18° in Umfangsrichtung entspricht.

Durch einen Drehzahlsensor 20 wird das High-Speed-Pyrometer mit der Drehzahl des Rotors 3 synchronisiert. Durch eine derartige Synchronisation des Temperatursensors 8 mit der Drehzahl des Rotors 3 wird die Messung der Oberflächentemperatur auf dem Rotor 3, auch wenn sie mit hoher Frequenz durchgeführt wird, kontinuierlich annähernd, dass heißt im Rahmen der Messtoleranzen, an derselben Stelle in Umfangsrichtung ermittelt, was zu einer höheren Genauigkeit und Zuverlässigkeit der Messungen, besonders bei der Abbildung eines zeitlichen Verlaufs, führt.

Über eine Datenschnittstelle 23 ist der Temperatursensor 8 mit einer Auswerteeinheit 24 verbunden, welche mit einem Computersystem 25 verbunden ist.

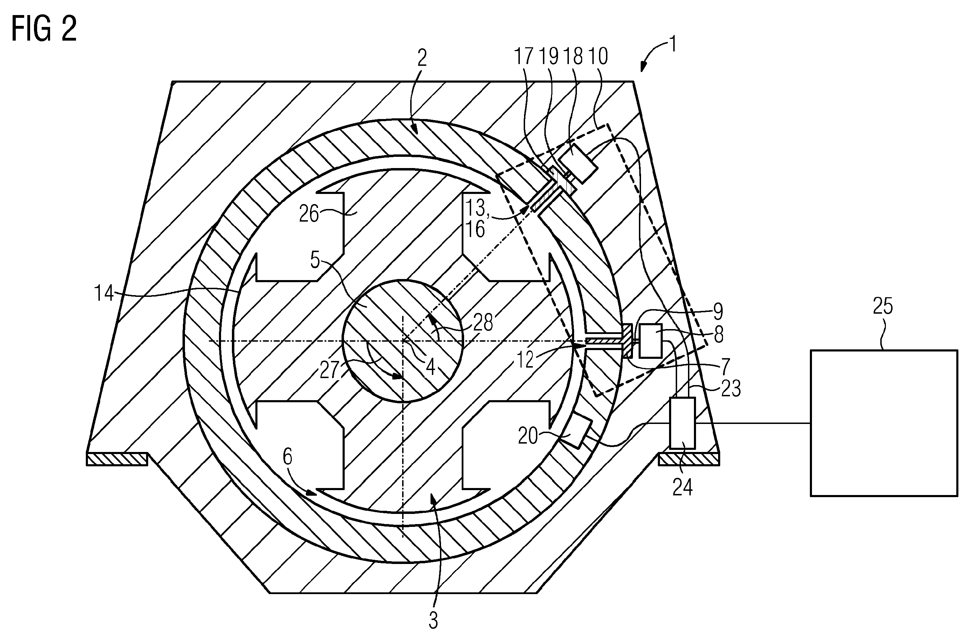

FIG 2 zeigt einen Querschnitt einer elektrischen rotierenden Maschine 1 mit einer zweiten Ausführungsform einer Vorrichtung 10 zur berührungslosen Temperaturerfassung. Die Vorrichtung 10 weist, im Vergleich zu FIG 1, einen zusätzlichen, zweiten Sensorkopf 17 auf, welcher über einen zusätzlichen zweiten Lichtleiter 19 mit einem zusätzlichen zweiten Temperatursensor 18 verbunden ist. Der zweite Temperatursensor 18 ist, wie der erste Temperatursensor 8, über eine Datenschnittstelle 23 mit der Auswerteeinheit 24 verbunden. Die übrige Ausführung der elektrischen rotierenden Maschine 1 entspricht der aus FIG 1. Der zweite Temperatursensor 18 ist ebenfalls als High-Speed-Teilstrahlungspyrometer ausgeführt und dafür geeignet mindestens 50.000 Temperaturmessungen in der Sekunde durchzuführen. Durch eine Synchronisierung der beiden Temperatursensoren 8, 18 miteinander können durch abwechselnde Messungen beispielsweise doppelt so viele Messungen durchgeführt werden, was, insbesondere bei einer Triggerung der beiden Temperatursensoren 8, 18 auf den Drehzahlsensor 20, zu einer Erhöhung der Winkelauflösung führt.

Da die Oberfläche 14 des Rotors 3 zwischen den Polen 26 in Umfangsrichtung Lücken aufweist, wird mit mindestens einem weiteren Sensorkopf 17 sichergestellt, dass auch bei einem Stillstand des Rotors 3, bei welchem sich die Temperatur auf der Oberfläche 14 durch die hohe Leitfähigkeit des Polmaterials, beispielsweise Stahl, ausgleicht, zuverlässig an mindestens einer Stelle auf der Oberfläche 14 des Rotors 3 eine Temperaturmessung durchgeführt wird. Durch den zweiten Temperatursensor 18, welcher mit dem zweiten Sensorkopf 17 verbunden ist, werden bei einem Stillstand des Rotors 3 genügend Temperaturmessungen an zumindest einer Stelle auf der Oberfläche 14 des Rotors 3 durchgeführt.

Der Winkelversatz 28 in Umfangsrichtung zwischen dem ersten Kanal 12 und dem zweiten Kanal 13 entspricht dem halben Öffnungswinkel 27 zweier benachbarter Pole 26 des Rotors 3. In dieser Ausführungsform beträgt der Winkelversatz 28 bei dem vorliegenden vierpoligen Schenkelpolläufer 45°. So ist sichergestellt, dass auch bei einem Stillstand des Rotors 3 zuverlässig an mindestens einer Stelle auf der Oberfläche 14 des Rotors 3 eine Temperaturmessung durchgeführt wird.

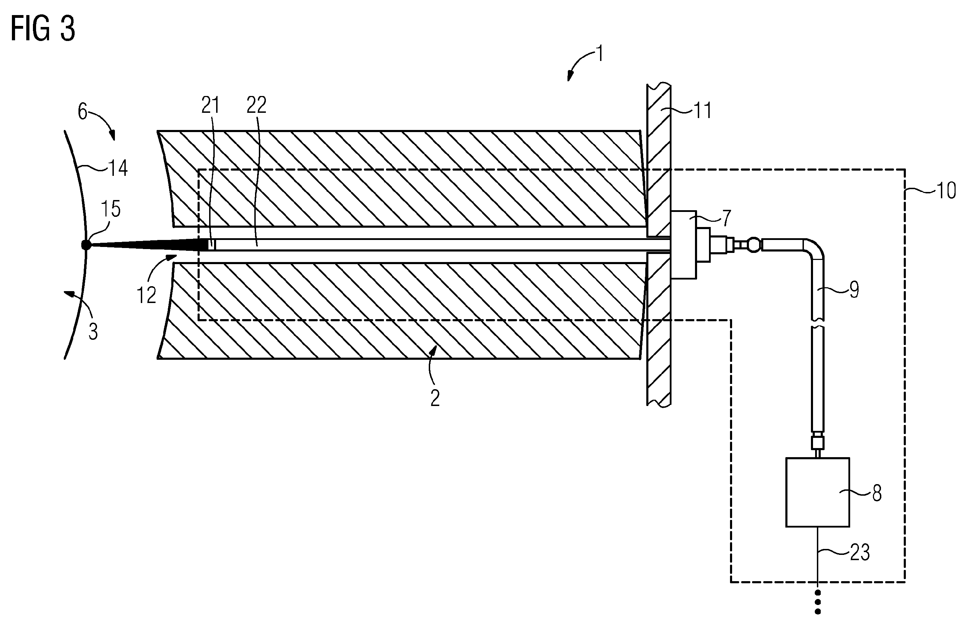

FIG 3 zeigt einen Längsschnitt einer Vorrichtung 10 zur berührungslosen Temperaturerfassung, welche wie in FIG 1 dargestellt ausgeführt ist. Der erste Sensorkopf 7 ist mit einem Gehäuse 11 einer elektrischen rotierenden Maschine 1 verbunden und weist eine Röhre 22 auf, welche sich in einem als Kühlluftkanal ausgeführten ersten Kanal 12 des Stators 2 der elektrischen rotierenden Maschine 1 befindet. Die Röhre 22 des Sensorkopfes 7 weist eine Fokussierungsvorrichtung 21, beispielsweise mindestens eine Linse, auf. Die Fokussierungsvorrichtung 21 ist auf ein Messfeld 15 auf der Oberfläche 14 des Rotors 3 der elektrischen rotierenden Maschine 1 fokussiert.

Die vom Messfeld ausgehende Wärmestrahlung wird über die Fokussierungsvorrichtung 21 und die Röhre 22 zum ersten Sensorkopf 7 geleitet. Von dort aus wird die Wärmestrahlung über einen ersten Lichtleiter 9 an einen ersten Temperatursensor 8 übertragen. Der Temperatursensor 8, welcher, wie in FIG 1 gezeigt, als ein High-Speed-Teilstrahlungspyrometer ausgeführt ist, konvertiert die empfangene Wärmestrahlung in ein von der Leistung der empfangenen Wärmestrahlung abhängiges Digitalsignal, welches über eine Datenschnittstelle 23 ausgegeben wird. Die Datenschnittstelle 23 ist als eine serielle Hochgeschwindigkeits-Schnittstelle ausgeführt.

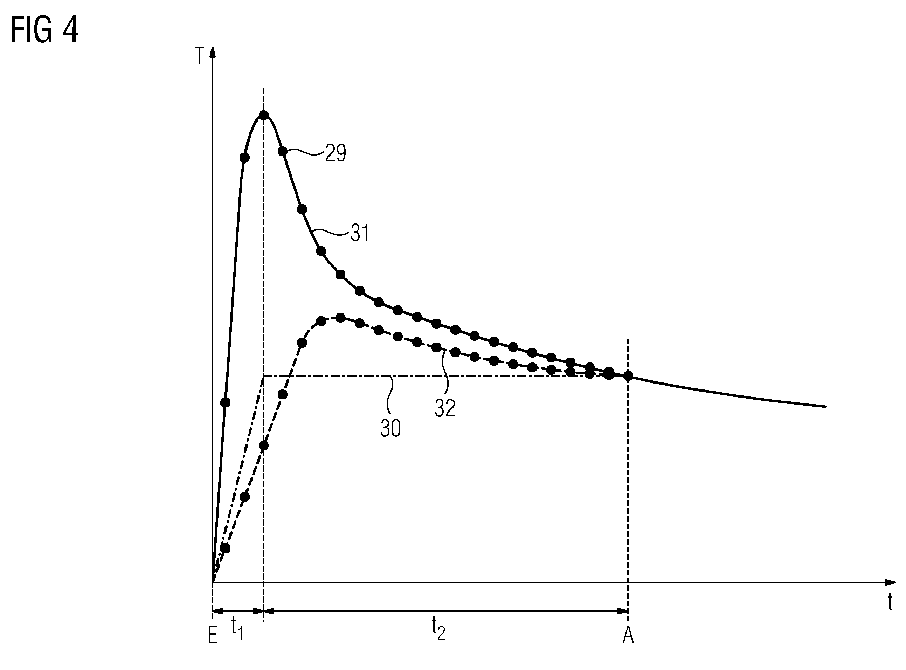

FIG 4 zeigt eine schematische Darstellung eines typischen Temperaturverlaufs bei einem asynchronen Anlauf. Es sind die einzelnen Werte der Temperatur T der einzelnen Temperaturmessungen 30 einer maximalen Temperatur 31, beispielsweise auf einem Polschuh des Rotors 3, und einer minimalen Temperatur 32, beispielsweise auf einem Polschaft des Rotors 3, auf der Oberfläche 14 des Rotors 3 sowie eine modellierte Temperatur 30 in Abhängigkeit der Zeit t dargestellt. Nach dem Einschaltzeitpunkt E steigt die modellierte Temperatur 30 während des asynchronen Anlaufs in einem ersten Zeitraum t1 näherungsweise linear an und verläuft im darauf folgenden Synchronbetrieb während eines zweiten Zeitraums t2 annähernd konstant.

Die maximale Temperatur 29 auf dem Polschuh steigt während des asynchronen Anlaufs im ersten Zeitraum t1 aufgrund der lokalen Wirbelstromverluste deutlich stärker an und erreicht einen signifikant höheren Temperaturwert als die modellierte Temperatur 30, während die minimale Temperatur 32 auf dem Polschaft während des asynchronen Anlaufs langsamer als die modellierte Temperatur 30 ansteigt. Während des Synchronbetriebs im zweiten Zeitraum t2 sinkt die maximale Temperatur 31 stark ab und es kommt im zeitlichen Verlauf zu einem Temperaturausgleich auf dem Rotor 3, welcher sich in einem Angleichen der maximalen Temperatur 31 und der minimalen Temperatur 32 äußert. Weiterhin sinken die gemessenen Temperaturen 31, 32 und gleichen sich der modellierten Temperatur 30 an. Nach einem Ausschaltzeitpunkt A sinken die gemessene Temperatur 31, 32 und die modellierte Temperatur 30 kontinuierlich. Wird eine vorgegebene Temperatur unterschritten, kann die elektrische rotierende Maschine 1 erneut gestartet werden. Durch ein erfindungsgemäßes Verfahren zur Temperaturerfassung kann beispielsweise der Zeitpunkt, an dem die vorgegebene Temperatur erreicht ist und die elektrische rotierende Maschine 1 erneut gestartet werden kann, zuverlässig ermittelt werden.

Zusammenfassend betrifft die Erfindung eine elektrische rotierende Maschine 1 mit einem um eine Rotationsachse 4 rotierbaren Rotor 3, einem Stator 2 und eine Vorrichtung 10 zur berührungslosen Temperaturerfassung, welche dafür vorgesehen ist, eine Temperatur auf einer Oberfläche 14 des Rotors 3 zu erfassen. Um, im Vergleich zum Stand der Technik, eine hohe Zuverlässigkeit und eine hohe Verfügbarkeit zu erzielen, wird vorgeschlagen, dass die Vorrichtung 10 einen ersten Temperatursensor 8 und einen ersten Sensorkopf 7 aufweist, wobei sich zumindest der erste Sensorkopf 7 in einem durch den Stator 2 verlaufenden und zum Rotor 3 hin offenen ersten Kanal 12 befindet.

## Patentansprüche

1. Elektrische rotierende Maschine (1) mit einem um eine Rotationsachse (4) rotierbaren Rotor (3), einem Stator (2) und eine Vorrichtung (10) zur berührungslosen Temperaturerfassung,
welche dafür vorgesehen ist, eine Temperatur auf einer Oberfläche (14) des Rotors (3) zu erfassen,
wobei die Vorrichtung (10) einen ersten Temperatursensor (8) und einen ersten Sensorkopf (7) aufweist,
**dadurch gekennzeichnet, dass**
sich zumindest der erste Sensorkopf (7) in einem durch den Stator (2) verlaufenden und zum Rotor (3) hin offenen ersten Kanal (12) befindet.

2. Elektrische rotierende Maschine (1) nach Anspruch 1, wobei der erste Kanal (12) als Kühlluftkanal ausgeführt ist.

3. Elektrische rotierende Maschine (1) nach einem der Ansprüche 1 oder 2,
wobei der erste Temperatursensor (8) als Pyrometer ausgeführt ist, welches eine minimale Erfassungszeit von weniger als 40 µs aufweist und dafür geeignet ist mindestens 25.000 Temperaturmessungen in der Sekunde durchzuführen.

4. Elektrische rotierende Maschine (1) nach einem der Ansprüche 1 bis 3,
wobei der erste Sensorkopf (7) über einen ersten Lichtleiter (9) mit dem ersten Temperatursensor (8) verbunden ist.

5. Elektrische rotierende Maschine (1) nach einem der Ansprüche 1 bis 4,
wobei die elektrische rotierende Maschine (1) einen Drehzahlsensor (20) aufweist, welcher dafür vorgesehen ist, den ersten Temperatursensor (8) mit der Drehzahl des Rotors (3) zu synchronisieren.

6. Elektrische rotierende Maschine (1) nach einem der Ansprüche 1 bis 5,
wobei die Vorrichtung (10) zur berührungslosen Temperaturerfassung mindestens einen zweiten Sensorkopf (17) aufweist, welcher sich in einem durch den Stator (2) verlaufenden und zum Rotor (3) hin offenen zweiten Kanal (13) befindet.

7. Elektrische rotierende Maschine (1) nach Anspruch 6, wobei die Vorrichtung (10) zur berührungslosen Temperaturerfassung mindestens einen zweiten Temperatursensor (18) aufweist,
wobei der zweite Sensorkopf (17) mit dem zweiten Temperatursensor (18) verbunden ist.

8. Elektrische rotierende Maschine (1) nach einem der Ansprüche 6 oder 7,
wobei der zweite Kanal (13) zum ersten Kanal (12) in Umfangsrichtung einen Winkelversatz (28) aufweist, welcher näherungsweise einem halben Öffnungswinkel (27) benachbarter Pole (26) des Rotors (3) entspricht.

9. Verfahren zur Bestimmung der Oberflächentemperatur des Rotors (3) einer elektrischen rotierenden Maschine (1) mit einer Vorrichtung (10) zur berührungslosen Temperaturerfassung,
welche einen ersten Temperatursensor (8) und einen ersten Sensorkopf (7) aufweist,
wobei ein Messfeld (15) der Vorrichtung (10) auf eine Oberfläche (14) des Rotors (3) ausgerichtet wird,
wobei daraufhin die von der Oberfläche (14) ausgehende Wärmestrahlung vom ersten Sensorkopf (7) empfangen wird,
wobei der erste Temperatursensor (8) darauffolgend die Wärmestrahlung erfasst und ein von der Leistung der Wärmestrahlung abhängiges Digitalsignal erzeugt, welches über eine Datenschnittstelle (23) an eine Auswerteeinheit (24) übertragen wird.

10. Verfahren nach Anspruch 9,
wobei der erste Sensorkopf (7) mit dem ersten Temperatursensor (8) über einen ersten Lichtleiter (9) verbunden wird, wobei die Wärmestrahlung vom ersten Sensorkopf (7) über den ersten Lichtleiter (9) an den erste Temperatursensor (8) übertragen wird.

11. Verfahren nach einem der Ansprüche 9 oder 10,
wobei ab einem asynchronen Anlauf der elektrischen rotierenden Maschine (1) der erste Temperatursensor (8),
welcher als Pyrometer ausgeführt ist und
welcher durch einen Drehzahlsensor (20) mit der Drehzahl des Rotors (3) synchronisiert wird,
mindestens 25.000 Temperaturmessungen in der Sekunde in Umfangsrichtung durchführt,
wobei aus der Vielzahl an Temperaturmessungen pro Rotorumdrehung eine Maximaltemperatur der Oberfläche (14) des Rotors (3) und/oder eine winkelabhängige Temperaturverteilung ermittelt werden.

12. Verfahren nach Anspruch 11,
wobei einer Vielzahl an Maximaltemperaturen ein zeitabhängiger Verlauf der Maximaltemperatur ermittelt wird.
